# EUROPÄISCHE PATENTSCHRIFT

(11) **EP 1 767 843 B1**
(45) Veröffentlichungstag und Bekanntmachung des Hinweises auf die Patenterteilung: **01.12.2010**
(21) Anmeldenummer: 06120516.7
(22) Anmeldetag: 12.09.2006
(51) Int. Cl.: F16L 37/06, F16L 55/24

(54) **Schnellkupplungsanschlussteil mit Filter**
Quick connecting device comprising a filter
Dispositif de raccordement rapide avec un filtre

(30) Priorität: 22.09.2005 DE 102005000126
(43) Veröffentlichungstag der Anmeldung: 28.03.2007
(73) Patentinhaber: HILTI Aktiengesellschaft, 9494 Schaan (LI)
(72) Erfinder: Hefele, Christian, 87739 Breitenbrunn (DE); Fröhlich, Peter, 86899 Landsberg (DE); Heiberger, Franz, 9507 Stettfurt (CH)
(74) Vertreter: Wildi, Roland

(56) Entgegenhaltungen:
- EP-A- 0 990 829
- US-A- 5 951 728

## Beschreibung

Die Erfindung bezeichnet einen Schnellkupplungsanschlussteil für Druckluftschläuche mit einem Filter, insbesondere zur Verwendung bei druckluftbetriebenen Handwerkzeugmaschinen.

Derartige Schnellkupplungsanschlussteile werden zum Anschluss eines pneumatischen Verbrauchers an eine Druckquelle benutzt. Somit wird der Schnellkupplungsanschlussteil bei zweckentsprechender Nutzung stets in der Richtung von der Druckquelle zum pneumatischen Verbraucher durchströmt.

Nach der EP0990829 ist ein Schnellkupplungsanschlussteil für Druckluftschläuche zur Verwendung bei druckluftbetriebenen Handwerkzeugmaschinen bekannt.

Nach der EP0146997 ist in einen Schnellkupplungsanschlussteil ein Filter integriert. Der Filter kann sich verschmutzen und zusetzen, wodurch der Durchsatz des Fliessmediums vermindert wird. Ein notwendiger Austausch des Filters verursacht Ausfallzeiten der Handwerkzeugmaschine.

Nach der DE19713819 ist ein Schnellkupplungsanschlussteil mit einem Rückschlagventil und einem Filter bekannt, welches über integrierte bewegliche Strömungskörper eines Strömungsanzeigers selbstreinigend ausgebildet ist. Für druckluftbetriebenen Handwerkzeugmaschinen sind raumbeanspruchende Strömungsanzeiger unnötig.

Nach der US5951728 weist ein Schnellkupplungsanschlussteil für Druckluftschläuche ein durchströmbares Druckgehäuse mit einem durchströmbaren Kupplungsstück, einem den Strömungsquerschnitt filternd abdichtenden Filter und einem beidseitig begrenzt versetzbaren Ventil auf.

Die Aufgabe der Erfindung besteht in der Realisierung eines Schnellkupplungsanschlussteils mit einem selbstreinigendem Filter.

Die Aufgabe wird im Wesentlichen durch die Merkmale des Anspruchs 1 gelöst. Vorteilhafte Weiterbildungen ergeben sich aus den Unteransprüchen.

So weist ein Schnellkupplungsanschlussteil für Druckluftschläuche ein durchströmbares Druckgehäuse mit einem den Strömungsquerschnitt filternd abdichtenden Filter und ein durchströmbares Kupplungsstück auf, welches mit einem durchströmbaren Druckkolben verbunden ist, der im Druckgehäuse beidseitig begrenzt versetzbar sowie in einer vom Filter fernen Aussenposition strömungsdicht ist jedoch in einer dem Filter näheren Innenposition strömungsoffen zum Druckgehäuse ist sowie einen Strömungsspalt ins Freie öffnet.

Da beim Kupplungsvorgang des Kupplungsstücks mit dem zugeordneten Kupplungsgegenstück und somit der Druckkolben zum Filter hin in die Innenposition versetzt wird, öffnet sich ein Strömungsspalt zwischen dem Druckkolben und dem Druckgehäuse. Somit strömt das von der Druckquelle über den Druckluftschlauch und den Druckkolben einströmende Druckmittel gegen den Filter, an welchen es umgelenkt wird und durch den Strömungsspalt zwischen dem Druckkolben und dem Druckgehäuse ins Freie entweicht. Allfällig druckseitig am Filter vorhandene Schmutzartikel werden durch den Strömungsimpuls gelöst und von der Strömung mit ins Freie gerissen. Sobald der vom Nutzer geführte Kupplungsvorgang beendet ist, drückt der sich im Druckgehäuse aufbauende Innendruck den Druckkolben in die Aussenposition, wodurch der Druckkolben strömungsdicht zum Druckgehäuse wird. Somit bewirkt jeder Kupplungsvorgang, welcher bei Handwerkzeugmaschinen regelmässig vorkommt, eine Selbstreinigung des Filters.

Vorteilhaft weist der Druckkolben am filterseitigen Stirnende einen radial nach Aussen auskragenden Anschlagflansch auf, dem ein radial nach Innen auskragender Gegenanschlagflansch des Druckgehäuses passend zugeordnet ist, wodurch ein geeigneter Endanschlag der Aussenposition realisiert ist.

Vorteilhaft weist der Druckkolben am kupplungsseitigen Stirnende einen radial nach Aussen auskragenden Anschlagflansch auf, der dem Gegenanschlagflansch des Druckgehäuses passend zugeordnet ist, wodurch zudem ein geeigneter Endanschlag der Innenposition realisiert ist.

Vorteilhaft sind der Druckkolben sowie die diesen am Druckgehäuse abdichtende Druckfläche rotationssymmetrisch ausgebildet, wodurch bei zweckentsprechender Verbindung mit einem Druckluftschlauch unter Beibehaltung der Abdichtung ein Drehfreiheitsgrad besteht.

Vorteilhaft weist der Druckkolben ein separates Dichtmittel, weiter vorteilhaft einen elastischen O-Ring auf, wodurch minimale Verschwenkungen des Druckkolbens zum Druckgehäuse unter Beibehaltung der Abdichtung ermöglicht werden.

Vorteilhaft ist das Schnellkupplungsanschlussteil fest mit einer Handwerkzeugmaschine verbunden, wodurch dieser stets in hinreichender Menge gefiltertes Druckmittel zuführbar ist. Alternativ ist das Schnellkupplungsanschlussteil direkt mit einem Druckschlauch verbunden, wodurch es als filternde Schlauchkupplung ausgebildet ist.

Die Erfindung wird bezüglich eines vorteilhaften Ausführungsbeispiels näher erläutert mit:
- Fig. 1: als Schnellkupplungsanschlussteil im Kupplungsvorgang im Längsschnitt
- Fig. 2: als Schnellkupplungsanschlussteil bei Nutzung im Längsschnitt

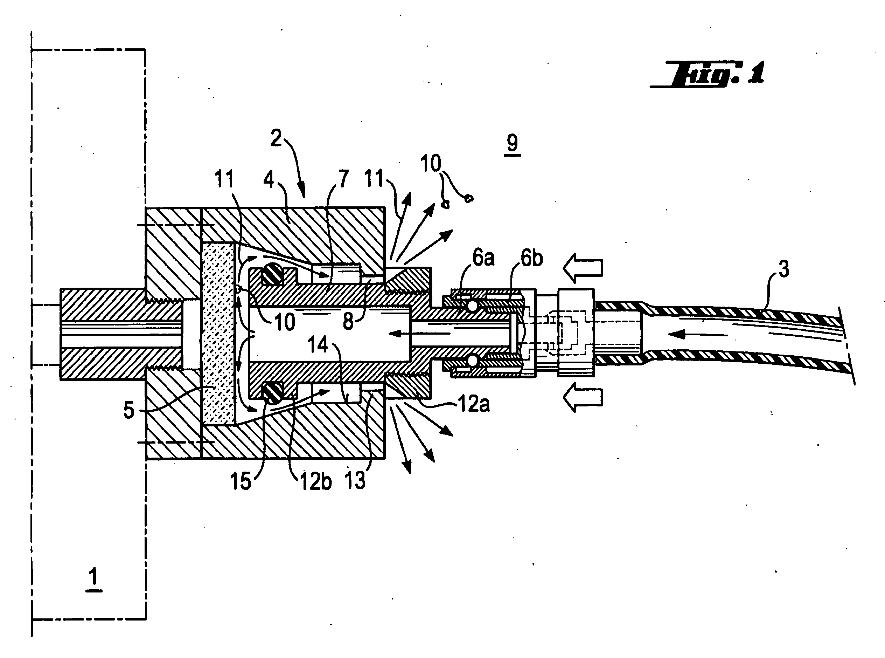

Nach Fig. 1 weist ein an einer nur angedeuteten Handwerkzeugmaschine 1 festgelegtes Schnellkupplungsanschlussteil 2 für einen Druckluftschlauch 3 ein durchströmbares Druckgehäuse 4 mit einem den Strömungsquerschnitt filternd abdichtenden Filter 5 und ein durchströmbares Kupplungsstück 6a auf. Das mit dem Gegenkupplungsstück 6b des Druckluftschlauches 3 schnellkuppelbare Kupplungsstück 6a ist selbst mit einem durchströmbaren Druckkolben 7 verbunden, der im Druckgehäuse 4 beidseitig begrenzt versetzbar und in einer dem Filter 5 nahen Innenposition (wie dargestellt) strömungsoffen zum Druckgehäuse 4 ist. Dabei strömt das von einer nicht dargestellten Druckquelle über den Druckluftschlauch 3 und den Druckkolben 7 einströmende Druckmittel in Form von Druckluft gegen den Filter 5, an welchen es umgelenkt wird und durch den Strömungsspalt 8 zwischen dem Druckkolben 7 und dem Druckgehäuse 4 ins Freie 9 entweicht, wobei druckseitig am Filter 5 vorhandene Schmutzartikel 10 durch den Strömungsimpuls gelöst und von der Strömung 11 mit ins Freie 9 gerissen werden. Der Druckkolben 7 weist an beiden Stirnenden einen radial nach Aussen auskragenden Anschlagflansch 12a /12b auf, denen ein radial nach Innen auskragender Gegenanschlagflansch 13 des Druckgehäuses 4 passend zugeordnet ist. Der Druckkolben 7 sowie die diesen am Druckgehäuse 4 abdichtende Druckfläche 14 sind rotationssymmetrisch ausgebildet. Der Druckkolben 7 weist ein separates Dichtmittel 15 in Form eines elastischen O-Rings aus Silikonkautschuk auf.

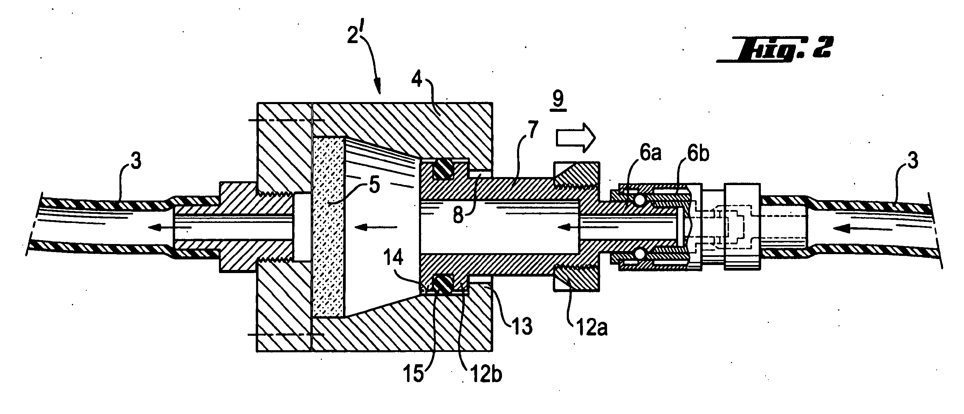

Nach Fig. 2 ist das alternativ als Schlauchkupplung ausgebildete Schnellkupplungsanschlussteil 2' selbst direkt mit einem Druckschlauch 3 verbunden. Der im Druckgehäuse 4 beidseitig begrenzt versetzbare Druckkolben 7 ist in der vom Filter 5 fernen Aussenposition (wie dargestellt) strömungsdicht gegen das Druckgehäuse 4 abgedichtet.

## Patentansprüche

1. Schnellkupplungsanschlussteil für einen Druckluftschlauch (3) mit einem durchströmbaren Druckgehäuse (4) mit einem den Strömungsquerschnitt filternd abdichtenden Filter (5) und mit einem durchströmbaren Kupplungsstück (6a), wobei das Kupplungsstück (6a) mit einem durchströmbaren Druckkolben (7) verbunden ist, der im Druckgehäuse (4) beidseitig begrenzt versetzbar ist, wobei die vom Filter (5) ferne Aussenposition strömungsdicht ist und die dem Filter (5) nähere Innenposition strömungsoffen zum Druckgehäuse (4) ist, **dadurch gekennzeichnet, dass** den Druckkolben 7 beim Kupplungsvorgang einen Strömungsspalt (8) zwichen den Druckkolben 7 und dem Druckgehäuse (4) ins Freie (9) öffnet.

2. Schnellkupplungsanschlussteil nach Anspruch 1, **dadurch gekennzeichnet, dass** der Druckkolben (7) am filterseitigen Stirnende einen radial nach Aussen auskragenden Anschlagflansch (12a) aufweist, dem ein radial nach Innen auskragender Gegenanschlagflansch (13) des Druckgehäuses (4) passend zugeordnet ist.

3. Schnellkupplungsanschlussteil nach Anspruch 2, **dadurch gekennzeichnet, dass** der Druckkolben (7) am kupplungsseitigen Stirnende einen radial nach Aussen auskragenden Anschlagflansch (12b) aufweist, der dem Gegenanschlagflansch (13) des Druckgehäuses (4) passend zugeordnet ist.

4. Schnellkupplungsanschlussteil nach einem der Ansprüche 1 bis 3, **dadurch gekennzeichnet, dass** der Druckkolben (7) sowie die diesen am Druckgehäuse (4) abdichtende Druckfläche (14) rotationssymmetrisch ausgebildet sind.

5. Schnellkupplungsanschlussteil nach einem der Ansprüche 1 bis 4, **dadurch gekennzeichnet, dass** der Druckkolben (7) ein separates Dichtmittel (15) aufweist.

6. Schnellkupplungsanschlussteil nach einem der Ansprüche 1 bis 5, **dadurch gekennzeichnet, dass** es fest mit einer Handwerkzeugmaschine (1) verbunden ist.

7. Schnellkupplungsanschlussteil nach einem der Ansprüche 1 bis 5, **dadurch gekennzeichnet, dass** es direkt mit einem Druckschlauch (3) verbunden ist.

## Claims

1. A quick-action coupling device for a compressed-air hose (3) comprising a flow-through pressure housing (4) with a filter (5) sealing the flow cross-section so as to filter the flow, and a flow-through coupling component (6a), said coupling component (6a) being connected to a flow-through pressure piston (7) which can be displaced within limits in both directions in the pressure housing (4), in which case the outer position remote from the filter (5) is sealed relative to the pressure housing in respect of the flow of the pressure medium and the inner position closer to the filter (5) is open relative to the pressure housing (4) in respect of the flow of the pressure medium, **characterized in that**, during the coupling process, the pressure piston (7) opens up a gap (8) between the pressure piston (7) and the pressure housing (4) allowing the pressure medium to flow out into the open air (9).

2. A quick-action coupling device according to Claim 1, **characterized in that** the pressure piston (7) has, at the face end when at the filter side, a stop flange (12a) projecting outwards in radial direction which cooperates with a corresponding stop flange (13) of the pressure housing (4) which projects inwards in radial direction.

3. A quick-action coupling device according to Claim 2, **characterized in that** the pressure piston (7) has, at the face end when at the coupling side, a stop flange (12b) projecting outwards in radial direction which cooperates with the corresponding stop flange (13) of the pressure housing (4).

4. A quick-action coupling device according to one of Claims 1 to 3, **characterized in that** the pressure piston (7) as well as the pressure surface (14) sealing the pressure piston (7) against the pressure housing (4) are formed in such a way as to be rotationally symmetrical.

5. A quick-action coupling device according to one of Claims 1 to 4, **characterized in that** the pressure piston (7) has separate sealing means (15).

6. A quick-action coupling device according to one of Claims 1 to 5, **characterized in that** it is securely attached to a hand-held power tool (1).

7. A quick-action coupling device according to one of Claims 1 to 5, **characterized in that** it is directly attached to a pressure hose (3).

## Revendications

1. Elément de raccordement à accouplement rapide pour un tuyau d'air comprimé (3) comportant un boîtier de pression (4) permettant un écoulement à travers celui-ci, muni d'un filtre (5) étanchéifiant de manière filtrante la section transversale d'écoulement et d'une pièce d'accouplement (6a) permettant un écoulement à travers celle-ci, dans lequel la pièce d'accouplement (6a) est reliée à un piston de pression (7) permettant un écoulement à travers celui-ci qui peut être déplacé de manière limitée des deux côtés dans le boîtier de pression (4), dans lequel la position extérieure éloignée du filtre (5) est étanche à l'écoulement et la position intérieure plus proche du filtre (5) est ouverte à l'écoulement par rapport au boîtier de pression (4), **caractérisé en ce que** lors du processus d'accouplement, le piston de pression (7) ouvre un espace d'écoulement (8) à l'air libre (9) entre le piston de pression (7) et le boîtier de pression (4).

2. Elément de raccordement à accouplement rapide selon la revendication 1, **caractérisé en ce que** le piston de pression (7) comporte, sur l'extrémité frontale côté filtre, une bride de butée (12a) faisant saillie radialement vers l'extérieur, laquelle bride coopère de manière appropriée avec une contre-bride de butée (13) du boîtier de pression (4) faisant saillie radialement vers l'intérieur.

3. Elément de raccordement à accouplement rapide selon la revendication 2, **caractérisé en ce que** le piston de pression (7) comporte, sur l'extrémité frontale côté accouplement, une bride de butée (12b) faisant saillie radialement vers l'extérieur, laquelle bride coopère de manière appropriée avec la contre-bride de butée (13) du boîtier de pression (4).

4. Elément de raccordement à accouplement rapide selon l'une quelconque des revendications 1 à 3, **caractérisé en ce que** le piston de pression (7) et la surface de pression (14) réalisant l'étanchéité de celui-ci contre le boîtier de pression (4) sont configurés avec une symétrie de rotation.

5. Elément de raccordement à accouplement rapide selon l'une quelconque des revendications 1 à 4, **caractérisé en ce que** le piston de pression (7) comporte des moyens d'étanchéité séparés (15).

6. Elément de raccordement à accouplement rapide selon l'une quelconque des revendications 1 à 5, **caractérisé en ce qu'**il est fixement relié à un outil à main (1).

7. Elément de raccordement à accouplement rapide selon l'une quelconque des revendications 1 à 5, **caractérisé en ce qu'**il est directement relié à un tuyau d'air comprimé (3).
